# EUROPEAN PATENT APPLICATION

(11) **EP 2 826 622 A1**
(43) Date of publication of application: **21.01.2015**
(21) Application number: 13761723.9
(22) Date of filing: 08.02.2013
(51) Int. Cl.: B32B 7/02, B29C 55/02, B32B 27/00

(54) **IMPACT-ABSORBING MEMBER, PROTECTIVE CLOTHING, AND PROCESS FOR PRODUCING IMPACT-ABSORBING MEMBER**

(30) Priority: 12.03.2012 JP 2012054528
(71) Applicant: Sekisui Chemical Co., Ltd., Osaka-shi, Osaka 530-8565 (JP)
(72) Inventor: NAKAMURA, Masanori, Kyoto-shi Kyoto 601-8105 (JP)
(74) Representative: Merkle, Gebhard
(86) International application number: PCT/JP2013/053041
(87) International publication number: WO 2013/136886

(57) **Abstract**

An impact-absorbing member having excellent blade-proof performance is provided.

An impact-absorbing plate (1) includes a plurality of stretched resin films (10) stacked and bonded to one another, and the plurality of stretched resin films (10) include a biaxially stretched resin film (12).

## Description

### TECHNICAL FIELD

The present invention relates to an impact-absorbing member, protective clothing including the impact-absorbing member, and a process for producing an impact-absorbing member.

### BACKGROUND ART

As a material to be used for a bulletproof vest or the like, an impact-absorbing plate excellent in bulletproof performance and blade-proof performance has been desired heretofore.

For example, Patent Document 1 proposes a fiber-reinforced resin molded product as an impact-absorbing plate, and the fiber-reinforced resin molded product is formed by impregnating a fabric, which contains 0.01% by weight to 10% by weight of a fluorine compound, with a resin composition.

### Related Art Document

### Patent Document

Patent Document 1: JP 2002-316319 A

### SUMMARY OF THE INVENTION

### PROBLEMS TO BE SOLVED BY THE INVENTION

It is desired to further enhance blade-proof performance of impact-absorbing plates.

A principal object of the present invention is to provide an impact-absorbing member having excellent blade-proof performance.

### MEANS FOR SOLVING THE PROBLEMS

An impact-absorbing member according to the present invention includes a plurality of stretched resin films stacked and bonded to one another. The plurality of stretched resin films include a biaxially stretched resin film.

Preferably, the plurality of stretched resin films include the biaxially stretched resin film and a uniaxially stretched resin film.

At least one of principal surfaces of a laminate of the plurality of stretched resin films may be formed of a uniaxially stretched resin film.

Preferably, the plurality of stretched resin films include a plurality of uniaxially stretched resin films whose stretching directions are mutually different.

The impact-absorbing member according to the present invention may further include at least one of a woven fabric and a braided fabric which is stacked on the plurality of stretched resin films.

Preferably, the plurality of stretched resin films include a plurality of biaxially stretched resin films whose stretching directions are mutually inclined.

Preferably, the stretched resin film includes a crystalline polymer.

A 180° peeling strength per 1 cm of width of the adjacent stretched resin films is preferably 0.1 kgf to 3 kgf.

The adjacent stretched resin films may be bonded directly to each other.

The impact-absorbing member according to the present invention may further include an adhesive layer which bonds adjacent stretched resin films to each other.

The adjacent stretched resin films may be at least partially kept from being not bonded to each other.

The stretched resin films may have a through-hole, and the plurality of stretched resin films may be bound together by a binding member inserted in the through-hole.

Preferably, a binding member is formed of a metal.

The stretched resin film may be formed of a porous material.

The stretched resin film may have a vent hole.

Preferably, the vent hole provided in one of the stretched resin films and a vent hole provided in a stretched resin film adjacent to the one of the stretched resin films do not overlap each other.

Protective clothing according to the present invention includes the impact-absorbing member according to the present invention.

In a method for producing an impact-absorbing member according to the present invention, a plurality of stretched resin films including a biaxially stretched resin film are stacked and thermocompression-bonded to obtain an impact-absorbing member.

### EFFECT OF THE INVENTION

According to the present invention, it is possible to provide an impact-absorbing member having excellent blade-proof performance.

### BRIEF DESCRIPTION OF DRAWINGS

FIG. 1 is a schematic sectional view of an impact-absorbing plate according to a first embodiment.
FIG. 2 is a schematic sectional view of an impact-absorbing plate according to a modification.
FIG. 3 is a schematic sectional view of an impact-absorbing member according to a second embodiment.
FIG. 4 is a schematic sectional view of protective clothing according to a third embodiment.
FIG. 5 is a schematic sectional view taken along the line V-V in FIG. 4.

### MODE(S) FOR CARRYIG OUT THE INVENTION

One example of a preferred embodiment in which the present invention is carried out will be described below. However, the embodiment described below is merely illustrative. The present invention is in no way limited to the embodiment described below.

In the drawings which are referred to in the embodiment etc., members having substantially the same function are referred to with the same symbol. The drawings which are referred to in the embodiment etc. are schematically described, so that the dimension ratio etc. of an article drawn in the drawing may be different from the dimension ratio etc. of the real article. The dimension ratio etc. of an article may vary among drawings. The specific dimension ratio etc. of the article should be determined by considering the following descriptions.

### (First Embodiment)

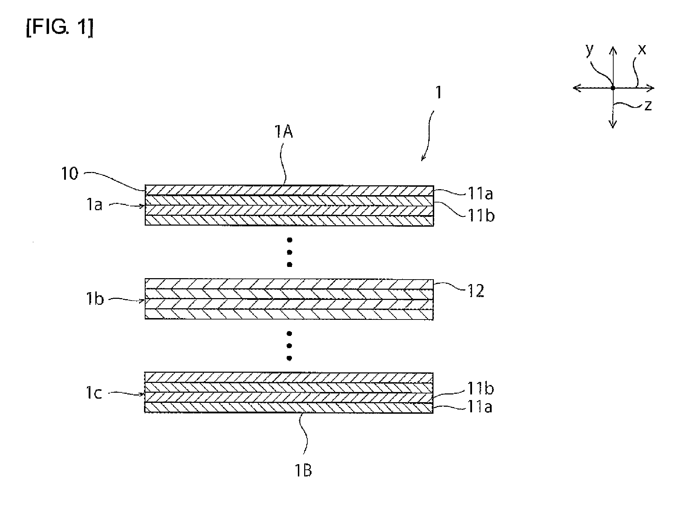

As illustrated in FIG. 1, an impact-absorbing plate 1 includes a plurality of stretched resin films 10. A plurality of stretched resin films 10 are stacked along a z axis direction, i.e. a thickness direction. The stretched resin films 10 adjacent to each other in the z axis direction are bonded to each other. Specifically, the stretched resin films 10 adjacent to each other in the z axis direction are bonded directly to each other. The impact-absorbing plate 1A is configurated by a laminate including the plurality of stretched resin films 10 stacked and stacked to one another form.

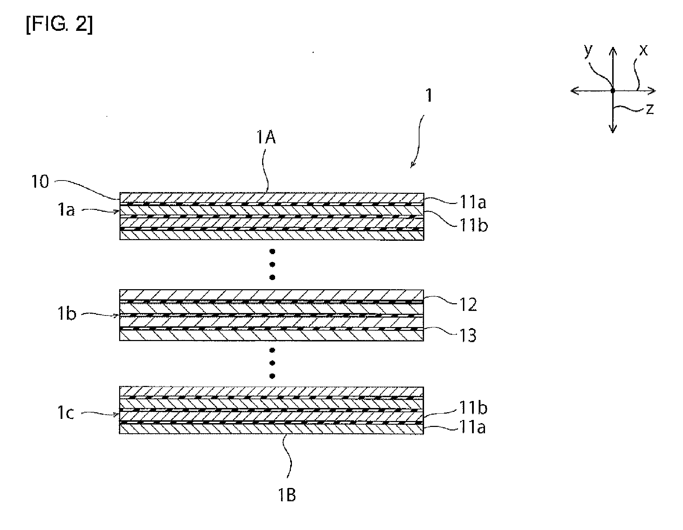

As illustrated in FIG. 2, adjacent stretched resin films 10 may be bonded to each other by an adhesive layer 13. Preferably, the adhesive layer 13 is formed of, for example, a thermoplastic resin having a low melting point. Specific examples of the thermoplastic resin that is preferably used include ethylene-vinyl acetate copolymers, PVB resins, styrene ethylene-butylene styrene block copolymers and polyethylene resins etc.

Preferably, the stretched resin film 10 includes a crystalline polymer. In this case, the strength of the stretched resin film 10 in a stretching direction can be enhanced. Specific examples of the crystalline polymer that is preferably used include polyethylene, polypropylene, polyamide, polyacetal, polyethylene terephthalate, polybutylene terephthalate and liquid crystal polymers etc. Among them, polyethylen, polypropylene, and polyethylene terephthalate, which are easily draw-molded and are inexpensive, are more preferably used. The stretched resin film 10 may be formed of a resin composition containing fibers.

The thickness of the stretched resin film 10 is not particularly limited, and may be, for example, about 5 µm to 100 µm. When the thickness of the stretched resin film 10 is excessively thin, it may become difficult to mold the stretched resin film 10. When the thickness of the stretched resin film 10 is excessively thick, impact absorption performance may be deteriorated because the number of stacked films per unit thickness decreases.

The number of stretched resin films 10 of the impact-absorbing plate 1 may be appropriately set according to a required level of blade-proof performance and bulletproof performance and a thickness of the stretched resin film 10. The number of stretched resin films 10 of the impact-absorbing plate 1 is more preferably, for example, about 50 to 400. Generally, the thickness of the stretched resin film 10 and the number of stacked stretched resin films 10 are adjusted so that the thickness of the impact-absorbing plate 1 is about 2 mm to 10 mm.

A plurality of stretched resin films 10 include biaxially stretched resin films 12. Specifically, the impact-absorbing plate 1 includes a biaxially stretched resin film laminate 1b including a plurality of biaxially stretched resin films 12 stacked and bonded to one another.

A plurality of stretched resin films 10 include uniaxially stretched resin films 11a and 11b in addition to biaxially stretched resin films 12. The uniaxially stretched resin film 11a and the uniaxially stretched resin film 11b have mutually different stretching directions. Specifically, the stretching direction of the uniaxially stretched resin film 11a and the stretching direction of the uniaxially stretched resin film 11b are perpendicular to each other.

The impact-absorbing plate 1 is configurated by uniaxially stretched resin film laminates 1a and 1c in which uniaxially stretched resin film 11a and uniaxially stretched resin film 11b are alternately stacked and bonded to one another. First and second principal surfaces 1A and 1B of the impact-absorbing plate 1 are formed of uniaxially stretched resin film laminates 1a and 1c. Therefore, first and second principal surfaces 1A and 1B of the impact-absorbing plate 1 are formed of the uniaxially stretched resin film.

Next, action of the impact-absorbing plate 1 will be described. When an impact is applied to the principal surface 1A or the principal surface 1B of the impact-absorbing plate 1, stretched resin films 10 bonded are peeled by the impact. Consequently, energy of the impact is absorbed. Accordingly, for example, a crack extending through the impact-absorbing plate 1 in a thickness direction (z axis direction) is hard to be generated by energy of the applied impact. Preferably the bonding strength of adjacent stretched resin films 10 is appropriate for obtaining preferred impact absorption performance. Specifically, a 180° peeling strength per 1 cm of width of adjacent stretched resin films 10 is preferably 0.1 kgf to 3 kgf. When the 180° peeling strength per 1 cm of width of adjacent stretched resin films 10 is excessively low, sufficient impact absorption performance may not be obtained at the time of collision of articles because stretched resin films 10 are peeled during transportation or storage etc. When the 180° peeling strength per 1 cm of width of adjacent stretched resin films 10 is excessively high, energy of impact may not be adequately absorbed because stretched resin films 10 are not peeled when the impact is applied.

In the impact-absorbing plate 1, a plurality of stretched resin films 10 include biaxially stretched resin films 12 as described above. The biaxially stretched resin film 12 has a high strength in each of two directions in which the film is stretched. Thus, for example, even if an acute member sticks into biaxially stretched resin films 12, the hole is hard to expand, and therefore a sharp-edged member such as an ice pick is hard to pierce the impact-absorbing plate 1 including biaxially stretched resin films 12. Similarly, even when slashed with an edged tool, the impact absorbing plate 1 is hard to be pierced with the edged tool. Therefore, the impact-absorbing plate 1 has excellent blade-proof performance.

For obtaining further excellent blade-proof performance, all of the stretched resin films included in the impact-absorbing plate may be biaxially stretched resin films. However, the biaxially stretched resin film has the problem that it is difficult to enhance an elastic modulus. When all of the stretched resin films are biaxially stretched resin films, it may become difficult to obtain an impact-absorbing plate which has a high elastic modulus and is excellent in bulletproof performance.

On the other hand, the impact-absorbing plate 1 includes uniaxially stretched resin films 11a and 11b in addition to biaxially stretched resin films 2. In the case of uniaxially stretched resin films 11a and 11b, elastic modulus is easily enhanced as compared to the biaxially stretched resin film. Therefore, according to the impact-absorbing plate 1 including uniaxially stretched resin films 11a and 11b in addition to the biaxially stretched resin films 2, not only excellent blade-proof performance but also excellent bulletproof performance can be achieved.

The impact-absorbing plate may include at least one of a woven fabric and a braided fabric which is stacked on the stretched resin films. The impact-absorbing plate may include at least one of a woven fabric and a braided fabric in place of the uniaxially stretched resin film. That is, the impact-absorbing plate may include at least one of a woven fabric, a braided fabric and the uniaxially stretched resin film in addition to the biaxially stretched resin film.

As the braided fabric, for example, those formed by alternately stacking strip-shaped uniaxially stretched resin films along two or more different directions are preferably used. Specifically, for example, those formed by alternately stacking strip-shaped uniaxially stretched resin films along one direction and another direction perpendicular to the one direction, those formed by alternately stacking strip-shaped uniaxially stretched resin films along the one direction, the another direction and a direction inclined to the one direction at an angle of 45°, and the like are preferably used.

As the woven fabric, for example, plane weaves, twill weaves, basket weaves and the like are preferably used.

For further improving bulletproof performance of the impact-absorbing plate 1, at least one of principal surfaces 1A and 1B of the impact-absorbing plate 1 is preferably formed of the uniaxially stretched resin film 11a or the uniaxially stretched resin film 11b, and both principal surfaces 1A and 1B of the impact-absorbing plate 1 are more preferably formed of the uniaxially stretched resin film 11a or the uniaxially stretched resin film 11b.

For further improving bulletproof performance of the impact-absorbing plate 1, preferably the impact-absorbing plate 1 includes a plurality of uniaxially stretched resin films 11a and 11b whose stretching directions are mutually different, and more preferably the stretching direction of the uniaxially stretched resin film 11a and the stretching direction of the uniaxially stretched resin film 11b are orthogonal to each other.

Similarly, for further improving bulletproof performance of the impact-absorbing plate 1, preferably a plurality of stretched resin films 10 include a plurality of biaxially stretched resin films 12 whose stretching directions are mutually inclined.

For achieving excellent bulletproof performance, the total of the thicknesses of uniaxially stretched resin films 11a and 11b of the impact-absorbing plate 1 is preferably, for example, about 0.2 mm to 1 mm. For achieving excellent blade-proof performance, the total of the thicknesses of biaxially stretched resin films 12 of the impact-absorbing plate 1 is preferably, for example, about 1 mm to 9 mm.

Next, a method for producing the impact-absorbing plate 1 will be described.

First, uniaxially stretched resin films 11a and 11b and the biaxially stretched resin film 12 are provided. Uniaxially stretched resin films 11a and 11b can be molded using at least one of stretching methods such as, for example, a roll stretching method, a draw-stretching method, a zone heating stretching method and a stretching method by rolling. The draw ratio may be, for example, about 15 to 30.

The biaxially stretched resin film 12 can be molded using at least one of stretching methods such as, for example, an inflation molding, a tubular-type biaxial stretching method and a tender-type biaxial stretching method. The draw ratio may be, for example, about 2 to 5.

Next, uniaxially stretched resin films 11a and 11b and the biaxially stretched resin film 12 are appropriately stacked and thermocompression-bonded, whereby the impact-absorbing plate 1 can be produced. When the temperature during thermocompression bonding is excessively high, stretched resin films 10 may be excessively strongly fused together, or orientational relaxation of molecules in the stretched resin film 10 may occur. On the other hand, when the temperature during thermocompression bonding is extremely low, the bonding strength of stretched resin films 10 may become excessively low. Therefore, the temperature during thermocompression bonding is preferably approximately a temperature lower by 100°C to a temperature higher by 5°C than the melting point of the stretched resin film 10. Specifically, when the stretched resin film 10 is formed of high-density polyethylene, the temperature during themocompression bonding is preferably about 120°C to 130°C. When the stretched resin film 10 is formed of polyethylene terephthalate, the temperature during themocompression bonding is preferably about 150°C to 200°C.

The stacking order of stretched resin films 10 is not particularly limited to the stacking order in the impact-absorbing plate 1. For example, uniaxially stretched resin films and biaxially stretched resin films may be alternately stacked. In this case, for example, a uniaxially stretched resin film stretched in one direction, the biaxially stretched resin film, a uniaxially stretched resin film stretched in a direction perpendicular to the one direction, and the biaxially stretched resin film 12 may be stacked in this order.

Another example of a preferred embodiment of the present invention will be described. In the following descriptions, members having substantially the same function with the first embodiment are referred to with the same symbol, and explanations thereof are omitted.

### (Second Embodiment)

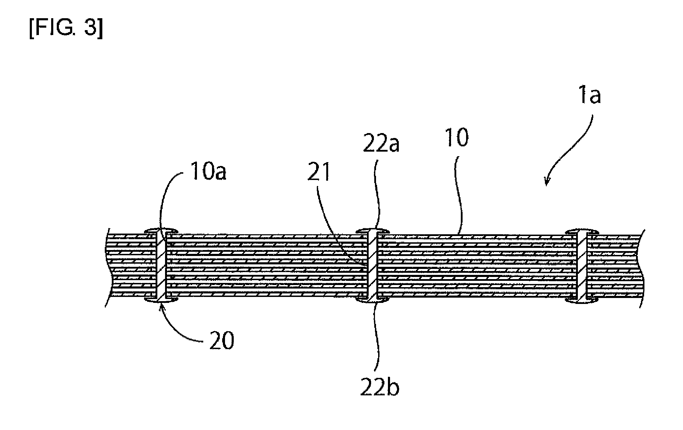

FIG. 3 is a schematic sectional view of an impact-absorbing member according to a second embodiment.

The first embodiment has been described by showing as an example the impact-absorbing plate 1 that is a rigid body in which adjacent stretched resin films 10 are wholly bonded to each other as one embodiment of the impact-absorbing member according to the present invention. However, the present invention is not limited to this configuration. For example, adjacent stretched resin films may at least partially kept from being not bonded to each other.

In an impact-absorbing member 1a according to this embodiment, adjacent stretched resin films 10 are not bonded to each other, and therefore can be relatively displaced. In each of a plurality of stretched resin films 10, a plurality of through-holes 10a are provided at intervals from one another. A plurality of stretched resin films 10 are stacked such that through-holes 10a of one film overlap those of another film.

A plurality of stretched resin films 10 are bound together by binding members 20 inserted in through-holes 10a. The binding member 20 includes a pillar portion 21 and first and second head portions 22a and 22b. The pillar portion 21 is inserted in the through-hole 10a, and extends from one side to the other side of a laminate of a plurality of stretched resin films 10. The first head portion 22a is joined to one end of the pillar portion 21, and situated at one side of the laminate of a plurality of stretched resin films 10. The second head portion 22b is joined to the other end of the pillar portion 21, and situated at the other side of the laminate of a plurality of stretched resin films 10. The first and second head portions 22a and 22b are larger than the through-hole 10a. Therefore, stretched resin films 10 are integrated in such a manner as to be retained by the first and second head portions 22a and 22b.

Preferably, the binding member 20 is formed of a metal. In this case, excellent bulletproof performance and blade-proof performance can also be imparted to sections provided with through-holes 10a. Preferably, the first and second head portions 22a and 22b are so sized as to cover the whole through-hole 10a irrespective of a location in the through-hole 10a at which the pillar portion 21 is situated.

When adjacent stretched resin films 10 are at least partially kept from being not bonded to each other as in this embodiment, the impact-absorbing member 1a having flexibility can be provided. The impact-absorbing member 1a having flexibility as described above is particularly suitably used in applications where flexibility or plasticity is required, such as, for example, those of clothing etc.

For obtaining higher plasticity, it is preferred that the pillar portion 21 is thinner than the through-hole 10a, and a clearance is provided between the outer circumferential surface of the pillar portion 21 and the inner circumferential surface of the through-hole 10a. The ratio of the diameter of the pillar portion 21 to the diameter of the through-hole 10a is preferably 1.0 or less, more preferably 0.8 or less. However, when the pillar portion 21 is excessively thin, the strength of the pillar portion 21 may be excessively reduced. Therefore, the ratio of the diameter of the pillar portion 21 to the diameter of the through-hole 10a is preferably 0.6 or more. The length of the pillar portion 21 is preferably longer than the total thickness of a plurality of stacked stretched resin films 10. The ratio of the length of the pillar portion 21 to the total thickness of a plurality of stacked stretched resin films 10 is more preferably 1.0 or more, further preferably 1.2 or more. However, when the pillar portion 21 is excessively long, a plurality of stretched resin films 10 may not be suitably bound. Therefore, the ratio of the length of the pillar portion 21 to the total thickness of a plurality of stacked stretched resin films 10 is preferably 1.3 or less.

In the impact-absorbing member 1a according to this embodiment, the stacked form of stretched resin films 10 is substantially the same as that in the impact-absorbing member 1 according to the first embodiment. Therefore, in this embodiment, the descriptions of the first embodiment are incorporated with regard to the stacked form of stretched resin films 10.

In this embodiment, an example has been described in which a plurality of stretched resin films 10 are bound using the binding member 20, but adjacent stretched resin films 10 may be partially bonded to each other using an adhesive, or bonded directly to each other.

### (Third Embodiment)

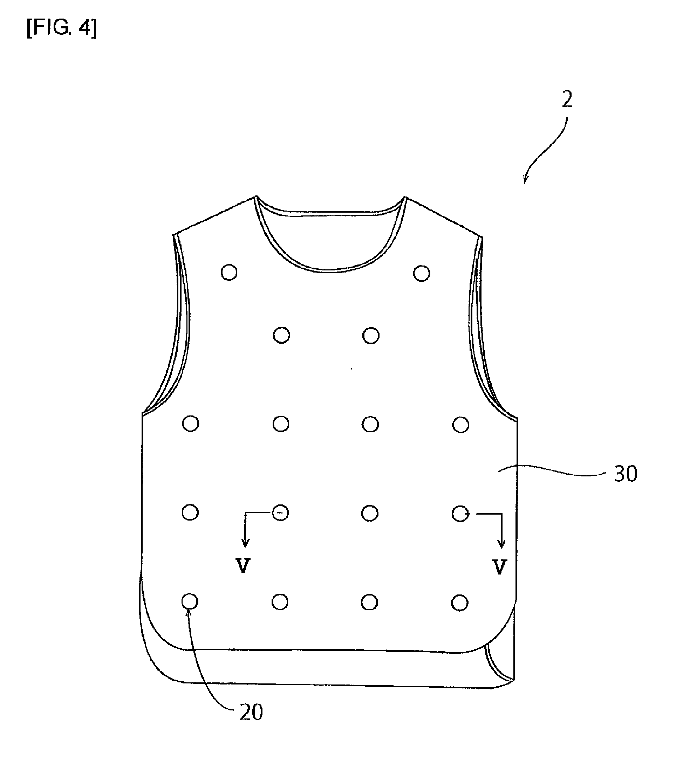

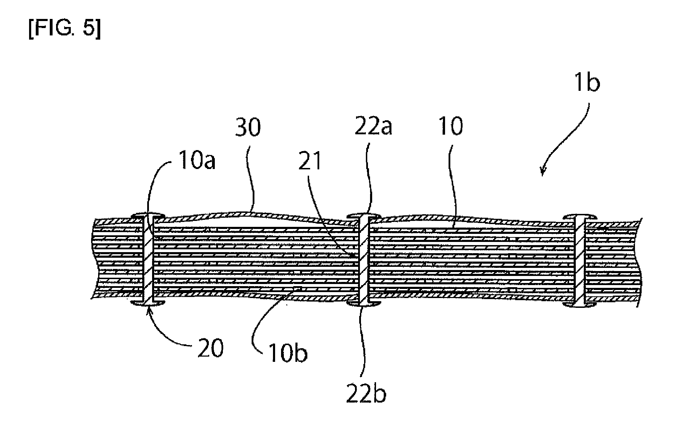

FIG. 4 is a schematic sectional view of protective clothing according to a third embodiment. FIG. 5 is a schematic sectional view taken along the line V-V in FIG. 4.

The impact-absorbing member according to the present invention is excellent in bulletproof performance and blade-proof performance, and therefore can be used in various applications such as, for example, those of protective clothing, protective shoes, vehicles, buildings and protectors such as shields. Particularly, an impact-absorbing member having flexibility, like the impact-absorbing member 1a according to the second embodiment, is suitably used for protective clothing etc.

In this embodiment, protective clothing 2 including an impact-absorbing member 1b having flexibility as illustrated in FIG. 5 will be described.

The protective clothing 2 includes a clothing body 30 made of cloth which forms the outer surface of the protective clothing 2. As illustrated in FIG. 5, the impact-absorbing member 1b is arranged inside the clothing body 30. The impact-absorbing member 1b has substantially the same configuration as that of the impact-absorbing member 1a according to the second embodiment except that the stretched resin film 10 has a vent hole 10b. The impact-absorbing member 1b is continuously arranged substantially all over the clothing body 30.

For example, when a rigid body such as a metal plate etc. is arranged inside the clothing body, the rigid body can be arranged only on a part of the clothing body. When the rigid body is arranged all over the clothing body, flexibility of the protective clothing is lost, so that it becomes difficult to put on and take off the clothing, and also movement of a person wearing the protective clothing is significantly restricted. Commonly tile-shaped rigid bodies are arranged in a matrix form at intervals from one another. In this case, bulletproof performance and blade-proof performance between rigid bodies are not secured. On the other hand, the impact-absorbing member 1b has flexibility. Therefore, for example, even when the impact-absorbing member 1b is continuously provided all over the clothing body 30 with no gap left, flexibility of the protective clothing 2 is maintained. Therefore, the impact-absorbing member 1b can be continuously and largely provided inside the clothing body 30. Accordingly, the protective clothing 2 excellent in protective performance can be provided.

Since the stretched resin film 10 is provided with the vent hole 10b, the protective clothing 2 excellent in air permeability can be provided. Instead of providing the vent hole 10b, the stretched resin film 10 may be formed of a porous material having an interconnected cell. The stretched resin film 10 may be formed of a porous material having an interconnected cell, and provided with the vent hole 10b.

In this embodiment, vent holes 10b of adjacent stretched resin films 10 are provided so as not overlap each other in a stacking direction. Therefore, for example, portions having low bulletproof performance and blade-proof performance are hard to occur as compared to a case where vent holes are provided so as to overlap one another in a stacking direction.

As illustrated in FIG. 5, in the protective clothing 2, the clothing body 30 and the impact-absorbing member 1b are fixed to each other by the binding member 20. Between adjacent binding members 20, the length of the impact-absorbing member 1b is longer than the length of the clothing body 30. That is, the impact-absorbing member 1b is loosely fixed to the clothing body 30 by the binding member 20. In this way, flexibility of the protective clothing 2 is further enhanced. Between adjacent binding members 20, the ratio of the length of the impact-absorbing member 1b to the clothing body 30 is preferably 1.0 or more, more preferably 1.1 or more for enhancing flexibility of the protective clothing 2. The ratio of the length of the clothing body 30 to the length of the impact-absorbing member 1b is usually 1.2 or less.

The distance between adjacent binding members 20 may be, for example, about 30 mm to 100 mm. When the distance between adjacent binding members 20 is excessively short, flexibility of the protective clothing 2 may be excessively reduced. When the distance between adjacent binding members 20 is excessively long, handling characteristics of the protective clothing 2 may be deteriorated.

### (Example 1)

A biaxially stretched polyester film having a thickness of 16 µm (FT16 manufactured by Teijin Limited) was cut into squares of 200 mm, and the sheets thus obtained were stacked in 150 layers. The obtained laminate was heated and pressed under a press load of 10 t using a pressing machine (30 t Pressure Pressing Machine manufactured by Toyo Seiki Seisaku-Sho, Ltd.) with the surface temperature set at 180°C. Thereafter, the setting of the surface temperature of the pressing machine was changed to 140°C and the laminate was held for 60 minutes while a press load of 10 t was maintained. The sample was cooled to room temperature while a pressure of 5 t was applied using a cooled pressing machine (30 t Pressure Pressing Machine manufactured by Toyo Seiki Seisaku-Sho, Ltd.). The thickness of the obtained biaxially stretched polyester film laminate was 2 mm.

Two uniaxially stretched high-density polyethylene sheets with a laminate film (Forte manufactured by SEKISUI SEIKEI Co., Ltd.), which had a thickness of 0.2 mm and a width of 200 mm, were stacked such that stretching directions were orthogonal to each other, and the obtained laminate was heated and pressed under a press load of 5 t for approximately 2 minutes using a pressing machine (30 t Pressure Pressing Machine manufactured by Toyo Seiki Seisaku-Sho, Ltd.) with the surface temperature set at 125°C, thereby obtaining a uniaxially stretched resin film laminate having a thickness of 0.4 mm.

The uniaxially stretched resin film laminate prepared as described above was stacked on both surfaces of the biaxially stretched polyester film laminate prepared as described above, with a film, which was obtained by heating and compressing to a thickness of 0.1 mm an ethylene vinyl acetate film (SP Sealant manufactured by Sekisui Film Co., Ltd.) having a thickness of 0.1 mm, interposed therebetween, and the obtained laminate was heated and pressed under a press load of 5 t for approximately 2 minutes using a pressing machine (30 t Pressure Pressing Machine manufactured by Toyo Seiki Seisaku-Sho, Ltd.) with the surface temperature set at 125°C, thereby preparing an impact-absorbing plate having a thickness of 2.9 mm.

### (Comparative Example)

14 uniaxially stretched high-density polyethylene sheets with a laminate film (Forte manufactured by SEKISUI SEIKEI Co., Ltd.), which had a thickness of 0.2 mm and a width of 200 mm, were stacked such that stretching directions were orthogonal to each other between adjacent sheets, and the obtained laminate was heated and pressed under a press load of 5 t for approximately 10 minutes using a pressing machine (30 t Pressure Pressing Machine manufactured by Toyo Seiki Seisaku-Sho, Ltd.) with the surface temperature set at 125°C, thereby preparing an impact-absorbing plate having a thickness of 2.9 mm.

### (Example 2)

A biaxially stretched polyester film having a thickness of 16 µm (FT16 manufactured by Teijin Limited) was cut into squares of 200 mm, and the sheets thus obtained were stacked in 150 layers. Holes having a diameter of 10 mm were formed in a matrix form at intervals of 50 mm in the obtained laminate using a drill. An epoxy adhesive (Araldite 8-254-01 manufactured by AS ONE Corporation) was poured into each of a plurality of holes formed, and the laminate was left standing for 2 days to bond the stacked biaxially stretched polyester films, thereby obtaining an impact-absorbing plate.

### (Impact Resistance Test)

A cylindrical hole having a diameter of 20 mm and a depth of 30 mm was formed at one end surface of a cylindrical brass material having a diameter of 38 mm, thereby preparing a 1 kg weight provided with a cylindrical hole. An eyeleteer hilt manufactured by DEBIKA Corporation was inserted into the cylindrical hole of the weight to prepare a blade with a weight. The blade with a weight was caused to fall down from 1.5 m above the impact-absorbing plate through the inside of an aluminum cylindrical pipe having a diameter of 40 mm, which was arranged on the impact-absorbing plate arranged on a cork board having a thickness of 5 cm, thereby colliding the blade against the impact-absorbing plate. A length of a part of the blade (needle), which resultantly pierced through the impact-absorbing plate, was measured.

As a result, the length of a part, which pierced through the impact-absorbing plate prepared in Example 1, was 6 mm. The length of a part, which pierced through the impact-absorbing plate prepared in Example 2, was 12 mm. On the other hand, the length of a part, which pierced through the impact-absorbing plate prepared in Comparative Example, was 18 mm.

### EXPLANATION OF SYMBOLS

- 1, 1a, 1b: impact-absorbing plate
- 1A, 1B: principal surface
- 1a, 1c: uniaxially stretched resin film laminate
- 1b: biaxially stretched resin film laminate
- 2: protective clothing
- 10: stretched resin film
- 10a: through-hole
- 11a, 11b: uniaxially stretched resin film
- 12: biaxially stretched resin film
- 13: adhesive layer
- 20: binding member
- 21: pillar portion
- 22a: first head portion
- 22b: second head portion

## Claims

1. An impact-absorbing member comprising:
a plurality of stretched resin films stacked and bonded to one another,
wherein the plurality of stretched resin films include a biaxially stretched resin film.

2. The impact-absorbing member according to claim 1,
wherein the plurality of stretched resin films include the biaxially stretched resin film and a uniaxially stretched resin film.

3. The impact-absorbing member according to claim 2,
wherein at least one of principal surfaces of a laminate of the plurality of stretched resin films is formed of the uniaxially stretched resin film.

4. The impact-absorbing member according to claim 2 or 3,
wherein the plurality of stretched resin films include a plurality of uniaxially stretched resin films whose stretching directions are mutually different.

5. The impact-absorbing member according to any one of claims 1 to 4,
further comprising at least one of a woven fabric and a braided fabric which is stacked on the plurality of stretched resin films.

6. The impact-absorbing member according to any one of claims 1 to 5,
wherein the plurality of stretched resin films include a plurality of biaxially stretched resin films whose stretching directions are mutually inclined.

7. The impact-absorbing member according to any one of claims 1 to 6,
wherein the stretched resin film includes a crystalline polymer.

8. The impact-absorbing member according to any one of claims 1 to 7,
wherein a 180° peeling strength per 1 cm of width of the adjacent stretched resin films is 0.1 kgf to 3 kgf.

9. The impact-absorbing member according to any one of claims 1 to 8,
wherein the adjacent stretched resin films are bonded directly to each other.

10. The impact-absorbing member according to any one of claims 1 to 8,
further comprising an adhesive layer that bonds the adjacent stretched resin films.

11. The impact-absorbing member according to any one of claims 1 to 8,
wherein the adjacent stretched resin films are at least partially kept from being not bonded to each other.

12. The impact-absorbing member according to claim 11,
wherein the stretched resin films have a through-hole, and
the plurality of stretched resin films are bound together by a binding member inserted in the through-hole.

13. The impact-absorbing member according to claim 12,
wherein the binding member is formed of a metal.

14. The impact-absorbing member according to any one of claims 1 to 13,
wherein the stretched resin films are formed of a porous material.

15. The impact-absorbing member according to any one of claims 1 to 14,
wherein the stretched resin film has a vent hole.

16. The impact-absorbing member according to claim 15,
wherein the vent hole provided in one of the stretched resin films and a vent hole provided in a stretched resin film adjacent to the one of the stretched resin films do not overlap each other.

17. Protective clothing comprising:
the impact-absorbing member according to any one of claims 1 to 16.

18. A method for producing an impact-absorbing member,
wherein a plurality of stretched resin films including a biaxially stretched resin film are stacked and thermocompression-bonded to obtain an impact-absorbing member.
